# EUROPÄISCHE PATENTANMELDUNG

(11) **EP 4 480 592 A1**
(43) Veröffentlichungstag der Anmeldung: **25.12.2024**
(21) Anmeldenummer: 23180026.9
(22) Anmeldetag: 19.06.2023
(51) Int. Cl.: B08B 3/02

(54) **HOCHDRUCKREINIGUNGSGERÄT**

(71) Anmelder: Andreas Stihl AG & Co. KG, 71336 Waiblingen (DE)
(72) Erfinder: KAUPP, Klaus, 71334 Waiblingen (DE); SAUTER, Matthias, 70599 Stuttgart (DE); MIRL, Anna, 73730 Esslingen (DE)
(74) Vertreter: Karzel, Philipp

(57) **Zusammenfassung**

Die Erfindung betrifft ein Hochdruckreinigungsgerät umfassend einen Anschluss für eine Flüssigkeitsquelle, eine Hochdruckpumpe (3) und eine Hauptleitung (5), durch die mittels der Hochdruckpumpe (3) Flüssigkeit von dem Anschluss (2) zu einer Ausspritzöffnung (6) der Hauptleitung (5) förderbar ist. Die Hauptleitung (5) weist zwischen dem Anschluss (2) und der Hochdruckpumpe (3) einen Saugraum (9) auf. Die Hauptleitung (5) weist zwischen der Hochdruckpumpe (3) und der Ausspritzöffnung (6) einen Druckraum (10) auf. Der Druckraum (10) ist mit dem Saugraum (9) fluidisch über eine Rückführleitung (12) verbunden. Das Hochdruckreinigungsgerät (1) umfasst ein Startventil (22). Das Hochdruckreinigungsgerät (1) ist so ausgelegt, dass das Startventil (22) so schließt, dass durch die Rückführleitung (12) keine Flüssigkeit von dem Druckraum (10) in den Saugraum (9) fließen kann, wenn der Volumenstrom durch das Startventil (22) mindestens einem Startvolumenschwellwert entspricht. Das Startventil (22) ist in der Hauptleitung (5) stromabwärts der Hochdruckpumpe (3) angeordnet.

## Beschreibung

Die Erfindung betrifft ein Hochdruckreinigungsgerät nach dem Oberbegriff des Anspruchs 1.

Es ist bekannt, dass zwischen dem Druckraum und dem Saugraum eine Rückführleitung mit einem Startventil vorgesehen sein kann. Das Hochdruckreinigungsgerät ist dabei so ausgelegt, dass das Startventil so schließt, dass durch die Rückführleitung keine Flüssigkeit von dem Druckraum in den Saugraum fließen kann, wenn der Volumenstrom durch das Startventil mindestens einem Startvolumenschwellwert entspricht. Unterhalb des Startvolumenschwellwerts ist jedoch ein Durchfluss von Flüssigkeit durch die Rückführleitung möglich. Dies erleichtert das Anlaufen der Hochdruckpumpe, bzw. des Motors der Hochdruckpumpe. Die Hochdruckpumpe muss insbesondere bei geschlossenem Hauptleitungsventil dann nicht gegen einen großen Druck im Druckraum arbeiten. Die Hochdruckpumpe kann in der Anlaufphase Flüssigkeit über die Rückführleitung vom Druckraum in den Saugraum im Kreis pumpen, ohne dass sie mit anfänglich geringem Drehmoment bzw. geringer Drehzahl gegen einen großen Gegendruck arbeiten muss. So kann die Pumpe bis zum Erreichen des Startvolumenschwellwerts und dem Schließen des Startventils eine Drehzahl erreichen, bei der sie dann bei entsprechendem Gegendruck ein ausreichendes Drehmoment zu Verfügung stellen kann. Erst nachdem die Hochdruckpumpe bzw. der Motor diese Drehzahl erreicht hat, muss sie bzw. er gegen einen größeren Druck im Druckraum anarbeiten. Bei Hochdruckreinigungsgeräten aus dem Stand der Technik kann es vorkommen, dass der Motor trotz des Startventils bei einem Anlaufversuch heiß läuft und ausgeht.

Der Erfindung liegt die Aufgabe zugrunde, ein gattungsgemäßes Hochdruckreinigungsgerät derart weiterzubilden, dass ein zuverlässiges Anlaufen des Motors der Hochdruckpumpe gewährleistet ist.

Diese Aufgabe wird durch ein Hochdruckreinigungsgerät mit den Merkmalen des Anspruchs 1 gelöst.

Der Erfindung liegt die Erkenntnis zugrunde, dass der Zeitpunkt, bzw. der Drehzahlwert, bei dem das Startventil aufgrund des Erreichens des Startvolumenschwellwerts schließt, bei den bisher bekannten Hochdruckreinigungsgeräten bei weitgehend unveränderten Betriebsbedingungen nicht immer verlässlich reproduzierbar ist. In den Fällen, in denen der Motor heiß läuft und aus geht, wird das Startventil geschlossen, bevor der Motor eine Drehzahl in seinem Arbeitsbereich erreicht hat.

Der Erfindung liegt weiterhin die Erkenntnis zugrunde, dass bei den Hochdruckreinigungsgeräten aus dem Stand der Technik der Volumenstrom in der Rückführleitung auch von externen Parametern wie dem Düsenquerschnitt an der Ausspritzöffnung und sonstigen Drosselungen in der Hauptleitung abhängt. Die Rückführleitung ist eine Abzweigungsleitung der Hauptleitung zwischen der Hochdruckpumpe und der Ausspritzöffnung. An dieser Abzweigung wird der Volumenstrom geteilt. Welcher Anteil des Volumenstroms vor der Abzweigung in die Rückleitung abgezweigt wird, ist abhängig von äußeren Parametern. Dies erklärt, warum bei ansonsten gleichbleibenden Betriebsbedingungen die Schließ- und Öffnungszeitpunkte des in der Rückführleitung angeordneten Startventils, bzw. die Drehzahlwerte des Motors, bei denen das Startventil öffnet oder schließt, variieren.

Zur Lösung des im Rahmen der Erfindung erkannten Problems sieht die Erfindung vor, das Startventil in der Hauptleitung stromabwärts der Hochdruckpumpe anzuordnen. Durch die Anordnung des Startventils in der Hauptleitung trifft der volle, ungeteilte Volumenstrom der Flüssigkeit auf das Startventil. Da kein Anteil des Volumenstroms aus der Hauptleitung abgezweigt wurde, bevor der Volumenstrom auf das Startventil trifft, schließt und öffnet das Startventil zuverlässig. Der Parameter, der über das Schließen und Öffnen des Startventils entscheidet, ist bei der Erfindung zuverlässig reproduzierbar. Da der auf das Startventil treffende Volumenstrom ungeteilt ist, spielen äußere Parameter, die einen Einfluss darauf haben, wie große der abgezweigte Anteil an Volumenstrom in die Rückführleitung ist, keine Rolle. Insbesondere ist der Volumenstrom am Startventil unabhängig vom Düsenquerschnitt der an der Ausspritzöffnung eingesetzten Düse. Daher sind auch die Zeitpunkte bzw. die Drehzahlen des Motors, bei denen das Startventil öffnet und schließt, reproduzierbar. Dies hat zur Folge, dass auch der Druck, gegen den die Hochdruckpumpe beim Anlaufen anarbeiten muss, reproduzierbar ist. Durch die Anordnung des Startventils in der Hauptleitung kann das Startventil zuverlässig und reproduzierbar arbeiten. Dementsprechend schließt das Startventil zuverlässig erst dann, wenn der Motor beim Anlaufen eine Drehzahl in seinem Arbeitsdrehzahlbereich erreicht hat.

Vorteilhaft ist das Startventil stromaufwärts der Rückführleitung in der Hauptleitung angeordnet. Dadurch ist sichergestellt, dass kein Anteil des Volumenstroms vor dem Auftreffen des Volumenstroms auf das Startventil in die Rückführleitung abgezweigt wird. Dadurch ergeben sich reproduzierbare Bedingungen für das Startventil. Zur Schaltung des Startventils steht der volle Volumenstrom zur Verfügung.

Insbesondere ist das Startventil außerhalb der Rückführleitung angeordnet. Dadurch ist ein Abzweigen eines Anteils des Volumenstroms durch die Hauptleitung in die Rückführleitung vor dem Auftreffen auf das Startventil verhindert.

Insbesondere ist die Hauptleitung im Bereich zwischen Hochdruckpumpe und Ausspritzöffnung diejenige Leitung des Hochdruckreinigungsgeräts, in der die Flüssigkeit von der Hochdruckpumpe zu der Ausspritzöffnung den kürzesten Weg zurücklegt. Abzweigungen von der Hauptleitung, in denen die Flüssigkeit möglicherweise vor- und zurückfließt, zählen nicht zu der Hauptleitung. Das Hochdruckreinigungsgerät besitzt einen Hauptströmungspfad. Entlang des Hauptströmungspfads strömt die Flüssigkeit vom Anschluss für die Flüssigkeitsquelle zu der Ausspritzöffnung. Der Hauptströmungspfad verläuft entlang der Hauptleitung. Das Startventil ist insbesondere im Hauptströmungspfad angeordnet.

Zweckmäßig ist das Hochdruckreinigungsgerät so ausgelegt, dass die Flüssigkeit bei Betrieb des Hochdruckreinigungsgeräts mit einem Volumenstrom durch das Startventil unterhalb des Startvolumenschwellwerts ohne Abzweigungsmöglichkeit von der Hochdruckpumpe zu dem Startventil in der Hauptleitung fließt. Insbesondere ist das Hochdruckreinigungsgerät so ausgelegt, dass die Flüssigkeit bei Betrieb des Hochdruckreinigungsgeräts unabhängig vom Volumenstrom durch das Startventil ohne Abzweigungsmöglichkeit von der Hochdruckpumpe zu dem Startventil in der Hauptleitung fließt.

Zweckmäßig ist das Startventil so ausgelegt, dass es bei einem Volumenstrom durch das Startventil unterhalb des Startvolumenschwellwerts den Durchfluss von Flüssigkeit von dem Druckraum in die Rückführleitung zulässt. Dies ermöglicht ein leichtes Anlaufen der Hochdruckpumpe bzw. des Motors der Hochdruckpumpe. Die Hochdruckpumpe bzw. der Motor muss während des Anlaufens gegen keinen großen Druck im Druckraum anarbeiten. Dies ist insbesondere bei geschlossenem Hauptleitungsventil von Vorteil.

Zweckmäßig ist das Startventil so ausgelegt, dass es den Durchfluss von Flüssigkeit von dem Druckraum in die Rückführleitung unterbindet, wenn der Volumenstrom durch das Startventil mindestens dem Startvolumenschwellwert entspricht. Dadurch kann sich nach Erreichen des Startvolumenschwellwerts ein ausreichender Druck im Druckraum aufbauen. Die Reinigung mit dem Hochdruckreinigungsgerät ist dann möglich. Dadurch, dass das Startventil erst nach Erreichen des Startvolumenschwellwerts den Durchfluss von Flüssigkeit von dem Druckraum in die Rückführleitung unterbindet, kann der Motor der Hochdruckpumpe zunächst eine ausreichende Drehzahl erreichen, bei der er ein ausreichendes Drehmoment erzeugen kann, um gegen einen entsprechenden Druck im Druckraum anzuarbeiten. Dies verhindert Ausfälle des Motors und der Hochdruckpumpe während des Anlaufens. Ebenso ist verhindert, dass der Motor überhaupt nicht die ausreichende Drehzahl erreicht, weil der Druck, gegen den die Pumpe bzw. der Motor anarbeiten muss, zu groß ist.

Insbesondere teilt das in der Hauptleitung sitzende Startventil den Druckraum der Hauptleitung in einen Pumpenabschnitt und einen Ausspritzabschnitt. Der Pumpenabschnitt ist zwischen der Hochdruckpumpe und dem Startventil angeordnet. Der Ausspritzabschnitt ist zwischen dem Startventil und der Ausspritzöffnung angeordnet. Vorteilhaft ist das Startventil so ausgelegt, dass es bei einem Volumenstrom durch das Startventil, der mindestens dem Startvolumenschwellwert entspricht, einen direkten Durchfluss von Flüssigkeit von dem Pumpenabschnitt in den Ausspritzabschnitt zulässt. Insbesondere erfolgt dieser direkte Durchfluss von dem Pumpenabschnitt in den Ausspritzabschnitt ohne den Umweg über die Rückführleitung. Insbesondere erfolgt der Übergang der Flüssigkeit von dem Pumpenabschnitt in den Ausspritzabschnitt ohne Abzweigen eines Anteils des Volumenstroms, beispielsweise in die Rückführleitung. Dadurch ist der von der Hochdruckpumpe im Druckraum erzeugte Druck unabhängig von dem Anteil des Volumenstroms, der in eine Rückführleitung abgezweigt wird. Dies trägt zu reproduzierbaren Betriebsbedingungen bei.

Das Startventil besitzt einen Eingang. Der Eingang ist insbesondere mit der Hauptleitung verbunden. Der Eingang ist zweckmäßig unmittelbar mit der Hauptleitung verbunden. Der Eingang ist insbesondere mit dem Pumpenabschnitt des Druckraums der Hauptleitung verbunden. Das Startventil besitzt einen Rückführausgang. Der Rückführausgang ist insbesondere mit der Rückführleitung verbunden. Zweckmäßig besitzt das Startventil einen Hauptleitungsausgang. Der Hauptleitungsausgang ist insbesondere mit der Hauptleitung verbunden. Insbesondere ist der Hauptleitungsausgang mit dem Ausspritzabschnitt des Druckraums der Hauptleitung verbunden. Das Hochdruckreinigungsgerät ist zweckmäßig so ausgelegt, dass das Startventil den Rückführausgang schließt, wenn der Volumenstrom durch das Startventil mindestens dem Startvolumenschwellwert entspricht.

Das Startventil besitzt ein Ventilglied. Die mittels der Hochdruckpumpe von dem Anschluss zu der Ausspritzöffnung durch die Hauptleitung geförderte Flüssigkeit trifft in der Hauptleitung in einer Strömungsrichtung auf das Startventil. Insbesondere ist das Hochdruckreinigungsgerät so gestaltet, dass die Strömungsrichtung im Auftreffpunkt der Flüssigkeit auf das Startventil parallel zur Hauptleitung verläuft.

In vorteilhafter Weiterbildung der Erfindung umfasst das Hochdruckreinigungsgerät ein Anschlagelement für das Ventilglied. Zweckmäßig ist das Ventilglied in Richtung auf das Anschlagelement vorgespannt. Das Hochdruckreinigungsgerät ist so ausgelegt, dass das Ventilglied bei Unterschreiten eines Ruhevolumenschwellwerts des Volumenstroms durch das Startventil an dem Anschlagelement anliegt. Dadurch wird das Ventilglied mit definiertem Druck gegen das Anschlagelement gedrückt. Insbesondere bei Verwendung einer Feder zur Vorspannung des Ventilglieds herrschen bei Anlage des Ventilglieds an dem Anschlagelement definierte Kräfteverhältnisse. Insbesondere liegt das Ventilglied in einem durch die Flüssigkeit unbelasteten Zustand des Ventilglieds an dem Anschlagelement an. Aufgrund des Anschlagelements und des Anliegens des Ventilglieds am Anschlagelement ist der Druck, der durch den Volumenstrom für eine Bewegung des Ventilglieds weg von dem Anschlagelement aufgebracht werden muss, klar definiert. Dies trägt zu reproduzierbaren Arbeitsbedingungen des Hochdruckreinigungsgeräts bei.

Zweckmäßig besitzt das Ventilglied eine Anströmfläche. Die Anströmfläche ist vorteilhaft quer, insbesondere senkrecht zur Strömungsrichtung ausgerichtet. Dadurch erfolgt eine besonders gute Kraft- bzw. Druckübertragung durch die Flüssigkeit auf das Ventilglied. Zweckmäßig ist die Anströmfläche des Ventilglieds vollständig in der Hauptleitung angeordnet.

Insbesondere ist das Ventilglied in einer Bewegungsrichtung beweglich. Zweckmäßig verläuft die Bewegungsrichtung in Richtung der Strömungsrichtung. Auch dies trägt zu einer guten Druckübertragung von der Flüssigkeit auf das Ventilglied bei. Es kann vorgesehen sein, dass die Bewegungsrichtung des Ventilglieds in Richtung einer Axialrichtung des Startventils verläuft. Insbesondere verläuft die Axialrichtung des Startventils in Längsrichtung des Startventils.

Vorteilhaft ist das Ventilglied vollständig in der Hauptleitung, insbesondere vollständig außerhalb der Rückführleitung, angeordnet.

Das Ventilglied besitzt eine zu einer Innenwand des Startventils zeigende Umfangsfläche. Zweckmäßig ist zwischen der Umfangsfläche und der Innenwand ein Spalt ausgebildet, der eine minimale freie Querschnittsfläche bildet. Die minimale freie Querschnittsfläche ist die kleinste Fläche, durch die der Volumenstrom im Startventil strömt. Die minimale freie Querschnittsfläche muss nicht zwangsläufig senkrecht zur Hauptleitung verlaufen. Sie steht aber senkrecht auf die am Ort der minimalen freien Querschnittsfläche vorliegende Strömungsrichtung des Volumenstroms durch das Startventil.

In vorteilhafter Weiterbildung der Erfindung weist das Startventil eine Eingangsfläche auf. Die Eingangsfläche ist senkrecht zur Strömungsrichtung orientiert. Durch die Eingangsfläche tritt die Flüssigkeit in das Startventil ein. Zweckmäßig lässt das Ventilglied unterhalb des Ruhevolumenschwellwerts, insbesondere in dem durch die Flüssigkeit unbelasteten Zustand, die minimale freie Querschnittsfläche durch die Hauptleitung zu. Zweckmäßig beträgt die minimale freie Querschnittsfläche mindestens 5%, bevorzugt mindestens 10% der Eingangsfläche. Dadurch ist ein Durchfluss von Flüssigkeit durch das Startventil auch unterhalb des Ruhevolumenschwellwerts, insbesondere in dem durch die Flüssigkeit unbelasteten Zustand, möglich. Dadurch, dass das Startventil unterhalb des Ruhevolumenschwellwerts die Hauptleitung nicht verschließt, lässt sich das Ventilglied leicht aus seiner Ruheposition bewegen. Beim bzw. nach dem Anlaufen der Hochdruckpumpe bzw. des Motors kann das Ventilglied dann leicht aus seiner Ruheposition, insbesondere von dem Anschlagelement weggedrückt werden. Ein Anhaften oder Festsaugen des Ventilglieds ist dadurch verhindert.

Bevorzugt beträgt die minimale freie Querschnittsfläche höchstens 70%, insbesondere höchstens 60% der Eingangsfläche. Dadurch kann genug Druck von der Flüssigkeit auf das Ventilglied wirken. Das Ventilglied lässt sich leicht aus seiner Ruheposition bewegen.

In besonderer Ausgestaltung der Erfindung besitzt die Umfangsfläche über den Umfang verteilt mehrere Aussparungen. Die Umfangsfläche besitzt einen senkrecht zur Innenwand des Startventils gemessenen kleinsten Spaltabstand. Die Aussparungen besitzen zur Innenwand einen senkrecht zur Innenwand des Startventils gemessenen größten Aussparungsabstand. Der größte Aussparungsabstand beträgt zweckmäßig mindestens das Doppelte des kleinsten Spaltabstands. Durch die Einbringung von Aussparungen kann das Ventilglied auf einfache Weise an verschiedene Einsatzbedingungen angepasst werden. Fertigungstechnisch müssen hierzu lediglich unterschiedliche Anzahlen an Aussparungen eingebracht werden. Insbesondere beträgt der größte Aussparungsabstand der Aussparungen höchstens das 20fache des kleinsten Spaltabstands.

Vorteilhaft ist das Ventilglied zum Verschließen eines Ventilsitzes des Startventils in Strömungsrichtung beweglich. Zweckmäßig ist der Ventilsitz an einem Eingang der Rückführleitung angeordnet.

Ein Ausführungsbespiel der Erfindung wird im Folgenden anhand der Zeichnung erläutert. Es zeigen:
- Fig. 1: eine schematische Darstellung eines Hochdruckreinigungsgeräts in einem Betriebszustand, in dem die Hochdruckpumpe keine Flüssigkeit fördert und die Rückführleitung nicht vom Starventil verschlossen ist,
- Fig. 2: eine schematische Darstellung eines Hochdruckreinigungsgeräts aus Fig. 1 in einem Betriebszustand, in dem die Hochdruckpumpe Flüssigkeit derart fördert, dass der Volumenstrom der durch das Startventil geförderten Flüssigkeit unterhalb des Startvolumenschwellwerts liegt,
- Fig. 3: eine schematische Darstellung des Hochdruckreinigungsgeräts aus Fig. 1 in einem Betriebszustand, in dem die Hochdruckpumpe Flüssigkeit mit einem Volumenstrom durch das Startventil oberhalb des Startvolumenschwellwerts fördert, so dass das Startventil die Rückführleitung verschließt,
- Fig. 4: eine halbgeschnittene, schematische Darstellung des Startventils aus den Fig. 1 bis 3 und
- Fig. 5: ein schematisches Diagramm, das die Abhängigkeit des verfügbaren und des erforderlichen Drehmoments des Motors zum Antrieb der Hochdruckpumpe von der Drehzahl zeigt.

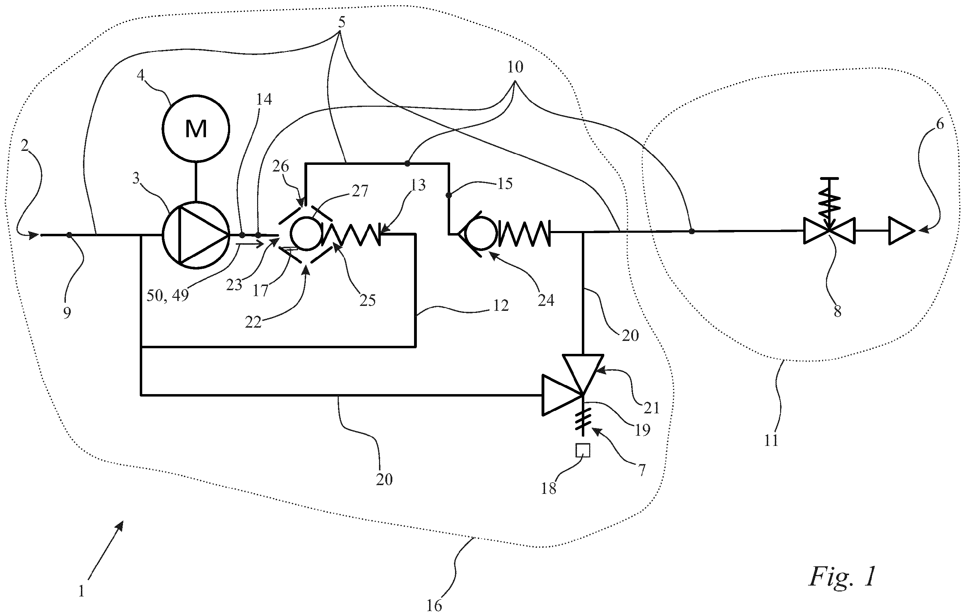

Fig. 1 zeigt in schematischer Darstellung ein Hochdruckreinigungsgerät 1. Das Hochdruckreinigungsgerät 1 umfasst eine Pumpeneinheit 16 und eine Ausspritzeinheit 11. Die Pumpeneinheit 16 und die Ausspritzeinheit 11 sind über eine Hauptleitung 5 fluidisch miteinander verbunden. Die Ausspritzeinheit 11 umfasst im Ausführungsbeispiel eine nicht dargestellte Pistole. Es kann aber auch vorgesehen sein, dass die Ausspritzeinheit eine Pistole und eine Lanze umfasst.

Das Hochdruckreinigungsgerät 1 umfasst einen Anschluss 2 für eine Flüssigkeitsquelle. Im Ausführungsbeispiel ist die Flüssigkeitsquelle eine externe Flüssigkeitsquelle. Die externe Flüssigkeitsquelle kann beispielsweise ein Hauswassernetz sein. Es kann aber auch vorgesehen sein, dass die Flüssigkeitsquelle integraler Bestandteil des Hochdruckreinigungsgeräts ist.

Das Hochdruckreinigungsgerät 1 umfasst eine Ausspritzöffnung 6. Das Hochdruckreinigungsgerät 1 umfasst die Hauptleitung 5. Die Hauptleitung 5 des Hochdruckreinigungsgeräts 1 verbindet den Anschluss 2 mit der Ausspritzöffnung 6 fluidisch. Der Anschluss 2 ist an der Pumpeneinheit 16 angeordnet. Die Ausspritzöffnung 6 ist an der Ausspritzeinheit 11 angeordnet. Im Ausführungsbeispiel ist die Ausspritzöffnung 6 an der als Pistole ausgebildeten Ausspritzeinheit 11 angeordnet. Es kann aber auch vorgesehen sein, dass die Ausspritzöffnung 6 an einer austauschbaren Lanze der Ausspritzeinheit 11 angeordnet ist.

Das Hochdruckreinigungsgerät 1 umfasst eine Hochdruckpumpe 3. Mittels der Hochdruckpumpe 3 ist durch die Hauptleitung 5 Flüssigkeit von dem Anschluss 2 zu der Ausspritzöffnung 6 förderbar. Die Flüssigkeitsquelle führt der Hauptleitung 5 Flüssigkeit zu. Die Hochdruckpumpe 3 ist in der Hauptleitung 5 angeordnet. Die Hochdruckpumpe 3 setzt die Flüssigkeit unter Druck. Die Hauptleitung 5 besitzt einen Saugraum 9 und einen Druckraum 10. Die Hochdruckpumpe 3 ist zwischen dem Saugraum 9 und dem Druckraum 10 der Hauptleitung 5 angeordnet. Die Hauptleitung 5 weist den Saugraum 9 zwischen dem Anschluss 2 und dem Hochdruckpumpe 3 auf. Die Hauptleitung 5 weist den Druckraum 10 zwischen der Hochdruckpumpe 3 und der Ausspritzöffnung 6 auf. Im Ausführungsbeispiel ist der Saugraum 9 durch einen Abschnitt der Hauptleitung 5 zwischen dem Anschluss 2 und der Hochdruckpumpe 3 gebildet. Im Ausführungsbeispiel ist der Druckraum 10 durch einen Abschnitt der Hauptleitung 5 zwischen der Hochdruckpumpe 3 und der Ausspritzöffnung 6 gebildet. Die Hochdruckpumpe 3 fördert Flüssigkeit vom Saugraum 9 zu dem Druckraum 10. Im Druckraum 10 herrscht insbesondere im Betrieb der Hochdruckpumpe 3 ein größerer Druck als in dem Saugraum 9. Der Saugraum 9 und der Druckraum 10 sind Bestandteile der Hauptleitung 5. Stromab der Hochdruckpumpe 3 herrscht im Betrieb der Hochdruckpumpe 3 ein größerer Druck in der Hauptleitung 5 als stromauf der Hochdruckpumpe 3.

Die Hochdruckpumpe 3 ist in der Pumpeneinheit 16 angeordnet. Zum Antrieb der Hochdruckpumpe 3 weist das Hochdruckreinigungsgerät 1 einen Motor 4 auf. Der Motor 4 ist in der Pumpeneinheit 16 angeordnet. Der Motor 4 kann als bürstenloser Gleichstrommotor ausgebildet sein. Ein bürstenloser Gleichstrommotor wird auch als EC-Motor bezeichnet. Bei dem Motor 4 kann es sich auch um einen Universalmotor handeln. Im Ausführungsbeispiel ist der Motor 4 ein Induktionsmotor. Der Induktionsmotor im Ausführungsbeispiel wird mit Wechselspannung betrieben. Die Spannungsquelle kann beispielsweise durch die Netzspannung zur Verfügung gestellt sein. Falls ein Batterie- oder Akkubetrieb vorgesehen ist, kann es sich bei dem Motor auch um einen bürstenlosen Gleichstrommotor handeln. Es kann vorgesehen sein, dass der Akku Bestandteil des Hochdruckreinigungsgeräts 1 ist.

Das Hochdruckreinigungsgerät 1 umfasst ein Hauptleitungsventil 8. Das Hauptleitungsventil 8 ist in der Hauptleitung 5 angeordnet. Das Hauptleitungsventil 8 weist zwei Ventilzustände auf. Die zwei Ventilzustände umfassen einen geschlossenen Zustand und einen offenen Zustand. Im offenen Zustand lässt das Hauptleitungsventil 8 einen Durchfluss von Flüssigkeit durch die Hauptleitung 5 zu. In dem geschlossenen Zustand unterbindet das Hauptleitungsventil 8 einen Durchfluss von Flüssigkeit durch die Hauptleitung 5. Im offenen Zustand des Hauptleitungsventils 8 wird Flüssigkeit aus der Ausspritzöffnung 6 herausgespritzt. Im geschlossenen Zustand des Hauptleitungsventils 8 wird keine Flüssigkeit aus der Ausspritzöffnung 6 herausgespritzt. Im Ausführungsbeispiel ist das Hauptleitungsventil 8 in der Ausspritzeinheit 11 angeordnet. Im Ausführungsbeispiel ist das Hauptleitungsventil 8 zwischen der Hochdruckpumpe 3 und der Ausspritzöffnung 6 angeordnet.

Das Hochdruckreinigungsgerät 1 umfasst eine Abschalteinrichtung 7. Das Hochdruckreinigungsgerät 1 ist so ausgelegt, dass die Abschalteinrichtung 7 aufgrund des im Druckraum 10 vorliegenden Drucks bewirkt, dass sich der Motor 4 im Aus-Zustand befindet, wenn der Druck im Druckraum mindestens einem Druckschwellwert entspricht.

Der Motor 4 weist einen Schalter 18 auf. Der Schalter 18 dient zur Schaltung des Motors 4 zwischen dem An-Zustand und dem Aus-Zustand. Die Abschalteinrichtung 7 weist ein Betätigungselement 19 auf. Das Hochdruckreinigungsgerät 1 ist so ausgelegt, dass die Flüssigkeit im Druckraum 10 so auf das Betätigungselement 19 der Abschalteinrichtung 7 wirkt, dass das Betätigungselement 19 den Schalter 18 des Motors 4 so betätigt, dass sich der Motor 4 im Aus-Zustand befindet, wenn der Druck im Druckraum 10 mindestens dem Druckschwellwert entspricht.

In Fig. 1 ist eine Druckentlastungsleitung 20 dargestellt. Die Druckentlastungsleitung 20 verbindet den Druckraum 10 fluidisch mit dem Saugraum 9. Durch die Druckentlastungsleitung 20 ist eine weitere fluidische Verbindung von Saugraum 9 und Druckraum 10 separat von der fluidischen Verbindung des Saugraums 9 mit dem Druckraum 10 über die Hochdruckpumpe 3 möglich.

Die Druckentlastungsleitung 20 kann geschlossen oder geöffnet sein. In der Druckentlastungsleitung 20 ist ein Druckentlastungsventil 21 angeordnet. Das Druckentlastungsventil 21 ist so ausgelegt, dass es öffnet, wenn der Druck im Druckraum 10 mindestens dem Druckschwellwert entspricht.

Das Hochdruckreinigungsgerät 1 ist so ausgelegt, dass zwischen dem Druckraum 10 und dem Saugraum 9 eine fluidische Verbindung besteht, wenn der Druck im Druckraum 10 höchstens einem Startdruckwert entspricht. Der Startdruckwert ist kleiner als der Druckschwellwert. Das Hochdruckreinigungsgerät 1 weist im Ausführungsbeispiel eine Rückführleitung 12 auf. Die Rückführleitung 12 kann den Druckraum 10 fluidisch mit dem Saugraum 9 verbinden. Durch die Rückführleitung 12 ist eine weitere fluidische Verbindung von Saugraum 9 und Druckraum 10 separat von der fluidischen Verbindung des Saugraums 9 mit dem Druckraum 10 über die Hochdruckpumpe 3 und separat von der Druckentlastungsleitung 20 möglich.

Das Hochdruckreinigungsgerät 1 umfasst ein Startventil 22. Das Hochdruckreinigungsgerät 1 ist so ausgelegt, dass das Startventil 22 bei Erreichen oder Überschreiten eines Startvolumenschwellwerts des Volumenstroms durch das Startventil 22 das Startventil 22 schließt. Insbesondere entspricht der Druck im Druckraum 10 bei Erreichen oder Überschreiten des Startvolumenschwellwerts des Volumenstroms durch das Startventil 22 mindestens dem Startdruckwert. Bei geschlossenem Startventil 22 kann durch die Rückführleitung 12 keine Flüssigkeit von dem Druckraum 10 in den Saugraum 9 fließen. Wie in Fig. 1 dargestellt, ist das Startventil 22 in der Hauptleitung 5 angeordnet. Das Startventil 22 ist stromabwärts der Hochdruckpumpe 3 in der Hauptleitung 5 angeordnet. Das Startventil 22 ist stromaufwärts der Rückführleitung 12 in der Hauptleitung 5 angeordnet. Von der Hochdruckpumpe 3 geförderte Flüssigkeit trifft zuerst auf das Startventil 22, bevor sie in die Rückführleitung 12 vordringen kann. Das Startventil 22 ist außerhalb der Rückführleitung 12 angeordnet.

Die Hauptleitung 5 ist diejenige Leitung des Hochdruckreinigungsgeräts 1 im Bereich zwischen der Hochdruckpumpe 3 und der Ausspritzöffnung 6, in der die Flüssigkeit von der Hochdruckpumpe 3 zu der Ausspritzöffnung 6 den kürzesten Weg zurücklegt. Abzweigungen von der Hauptleitung 5, in denen Flüssigkeit möglicherweise zuerst in die Abzweigung vordringt und dann wieder zurückfließt, sind nicht Bestandteil der Hauptleitung 5.

Das Hochdruckreinigungsgerät 1 ist so ausgelegt, dass die Flüssigkeit bei Betrieb des Hochdruckreinigungsgeräts 1 mit einem Volumenstrom durch das Startventil 22 unterhalb des Startvolumenschwellwerts ohne Abzweigungsmöglichkeit von der Hochdruckpumpe 3 zu dem Startventil 22 in der Hauptleitung 5 fließt. Insbesondere fließt die Flüssigkeit bei Betrieb des Hochdruckreinigungsgeräts 1 unabhängig vom Volumenstrom durch das Startventil 22 ohne Abzweigungsmöglichkeit von der Hochdruckpumpe 3 zu dem Startventil 22 in der Hauptleitung 5.

Das Startventil 22 besitzt im Wesentlichen drei Zustände. Die Zustände des Startventils 1 sind durch den Wert des Volumenstroms durch das Startventil 22 bestimmt. Ist der Wert des Volumenstroms der Flüssigkeit durch das Startventil 22 kleiner als ein Ruhevolumenschwellwert, befindet sich das Startventil 22 in einem Ruhemodus. Der Ruhemodus des Startventils 22 ist in Fig. 1 dargestellt. Im Ruhemodus reicht der von der Flüssigkeit auf das Startventil 22 ausgeübte Druck nicht aus, um das Startventil 22 in einen anderen Zustand zu überführen. Das Startventil 22 besitzt ein Ventilglied 27. Das Ventilglied 27 ist in die Ruhestellung des Ruhemodus vorgespannt. Es kann vorgesehen sein, dass das Ventilglied 27 hierbei einen Ventilsitz der Hauptleitung verschließt, so dass ein Durchfluss von Flüssigkeit durch die Hauptleitung 5 von dem Ventilglied 27 unterbunden ist. Im Ausführungsbeispiel weist das Startventil 22 jedoch ein Anschlagelement 17 auf. In der Ruhestellung liegt das Ventilglied 27 an dem Anschlagelement 17 an. Das Ventilglied 27 ist in Richtung auf das Anschlagelement 17 vorgespannt. Wenn der Volumenstrom durch das Startventil 22 kleiner als der Ruhevolumenschwellwert ist, liegt das Ventilglied 27 an dem Anschlagelement 17 an. Insbesondere liegt das Ventilglied 27 an dem Anschlagelement 17 an, wenn sich das Ventilglied 27 in einem durch die Flüssigkeit unbelasteten Zustand befindet. Im Ausführungsbeispiel ist das Startventil 22 so ausgelegt, dass im Ruhemodus ein Durchtritt von Flüssigkeit durch das Startventil 22 möglich ist. Hierfür ist bei Anlage des Ventilglieds 27 an dem Anschlagelement 17 ein Spalt zwischen dem Ventilglied 27 und dem Ventilgehäuse vorgesehen.

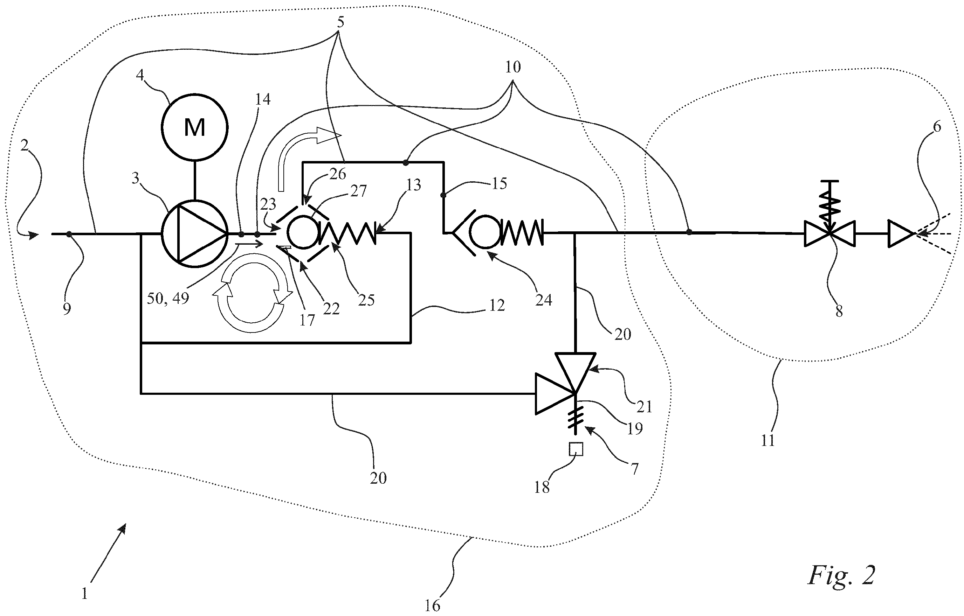

Fig. 2 zeigt das Startventil 22 in einem Startmodus. Im Startmodus wird Flüssigkeit durch das Startventil 22 hindurch von dem Druckraum 10 der Hauptleitung 5 über die Rückführleitung 12 zurück in den Saugraum 9 gefördert. Der Wert des Volumenstroms durch das Startventil 22 entspricht im Startmodus des Startventils 22 mindestens dem Ruhevolumenschwellwert. Der Wert des Volumenstroms der Flüssigkeit durch das Startventil 22 ist im Startmodus kleiner als ein Startvolumenschwellwert. Der Startvolumenschwellwert ist größer als der Ruhevolumenschwellwert. Im Ausführungsbeispiel ist das Startventil 22 so ausgelegt, dass es bei einem Volumenstrom durch das Startventil 22 unterhalb des Startvolumenschwellwerts den Durchfluss von Flüssigkeit von dem Druckraum 10 in die Rückführleitung 12 zulässt.

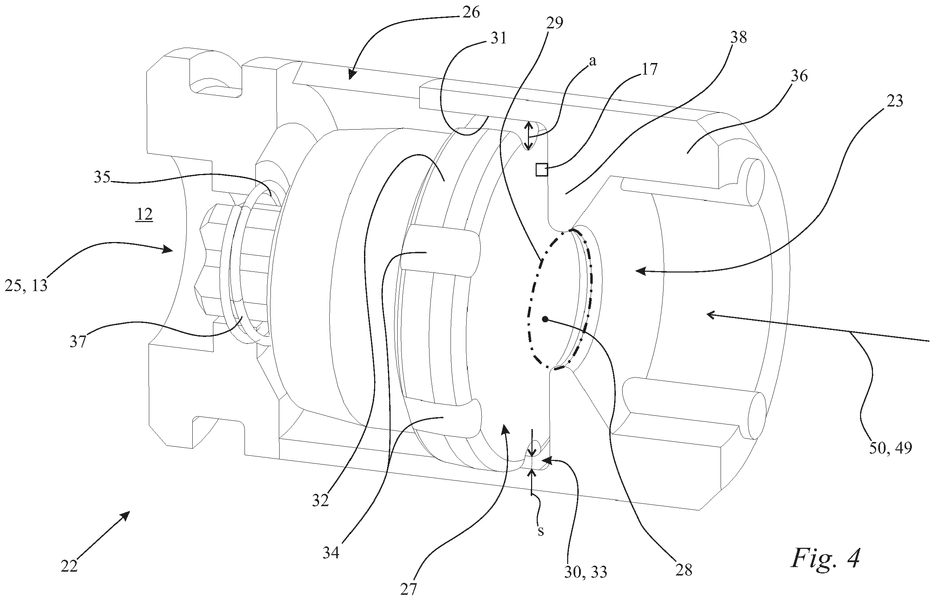

Das Startventil 22 besitzt einen in Fig. 4 dargestellten Ventilsitz 35. Wenn das Ventilglied 27 am Ventilsitz 35 anliegt, ist ein Durchfluss von Flüssigkeit aus dem Druckraum 10 der Hauptleitung 5 in die Rückführleitung 12 unterbunden. Im Startmodus befindet sich das Ventilglied 27 in einer Stellung, in der es weder an dem Anschlagelement 17 noch an dem Ventilsitz 35 anliegt.

Das Startventil 22 teilt den Druckraum 10 der Hauptleitung 5 in einen Pumpenabschnitt 14 und einen Ausspritzabschnitt 15. Der Pumpenabschnitt 14 des Druckraums 10 der Hauptleitung 5 erstreckt sich von der Hochdruckpumpe 2 bis zu dem Startventil 22. Der Ausspritzabschnitt 15 des Druckraums 10 der Hauptleitung 5 erstreckt sich von dem Startventil 22 bis zu der Ausspritzöffnung 6. Im Startmodus des Startventils 22 kann Flüssigkeit durch das Startventil 22 sowohl von dem Pumpenabschnitt 14 in den Ausspritzabschnitt 15 als auch von dem Pumpenabschnitt 14 in die Rückführleitung 12 fließen. Die Größe des Volumenstroms, der die Stellung des Ventilglieds 27 in dem Startventil 22 bestimmt, ist nahezu unbeeinflusst von der erst nach dem Ventilglied 27 auftretenden teilweisen Abzweigung des Volumenstroms in die Rückführleitung 12. Die Größe des Volumenstroms, der die Stellung des Ventilglieds 27 in dem Startventil 22 bestimmt, ist nahezu unbeeinflusst von der erst nach dem Ventilglied 27 auftretenden teilweisen Aufteilung des Volumenstroms in einen Anteil des Volumenstroms, der in den Ausspritzabschnitt 15 fließt und einen weiteren Anteil des Volumenstroms, der in die Rückführleitung fließt.

Das Startventil 22 besitzt einen Eingang 23. Der Eingang 23 des Startventils 22 ist mit der Hauptleitung 5 verbunden. Der Eingang 23 des Startventils 22 ist mit dem Pumpenabschnitt 14 des Druckraums 10 der Hauptleitung 5 verbunden. Das Startventil 22 besitzt einen Rückführausgang 25. Der Rückführausgang 25 des Startventils 22 ist mit der Rückführleitung 12 verbunden. Das Startventil 22 besitzt einen Hauptleitungsausgang 26. Der Hauptleitungsausgang 26 ist mit der Hauptleitung 5 verbunden. Der Hauptleitungsausgang 26 ist mit dem Ausspritzabschnitt 15 des Druckraums 10 der Hauptleitung 5 verbunden. Die Rückführleitung 12 besitzt einen Eingang 13. Der Ventilsitz 35 des Startventils 22 ist an dem Eingang 13 der Rückführleitung 12 angeordnet. Der Eingang 13 der Rückführleitung 12 fällt mit dem Rückführausgang 25 des Startventils 22 zusammen.

Im Startmodus des Startventils 22 kann Flüssigkeit von dem Eingang 23 des Startventils 22 sowohl zu dem Rückführausgang 25 als auch zu dem Hauptleitungsausgang 26 fließen.

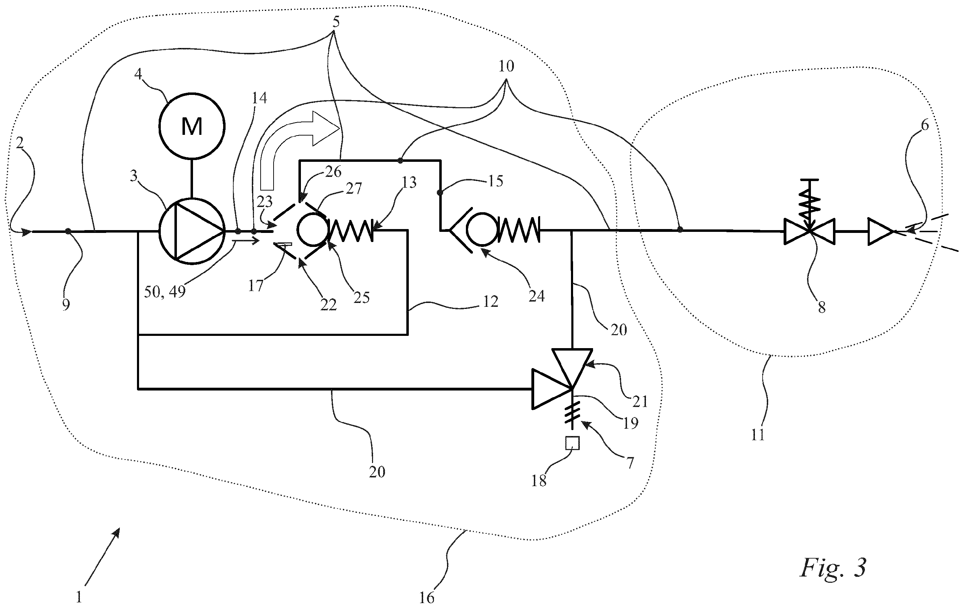

Fig. 3 zeigt das Startventil 22 in einem Schließmodus. Das Startventil 22 ist so ausgelegt, dass es bei einem Volumenstrom durch das Startventil 22, der mindestens dem Startvolumenschwellwert entspricht, den Durchfluss von Flüssigkeit von dem Druckraum 10 in die Rückführleitung 12 unterbindet. Wenn der Wert des Volumenstroms durch das Startventil mindestens dem Startvolumenschwellwert entspricht, schließt das Startventil 22 den Rückführausgang 25.

Das Startventil 22 ist so ausgelegt, dass es einen direkten Durchfluss von Flüssigkeit von dem Pumpenabschnitt 14 in den Ausspritzabschnitt 15 zulässt, wenn der Wert des Volumenstroms durch das Startventil 22 mindestens dem Startvolumenschwellwert entspricht. Insbesondere ist im Schließmodus ein verlustfreier Durchfluss von Flüssigkeit von dem Pumpenabschnitt 14 in den Ausspritzabschnitt 15 durch das Startventil 22 hindurch möglich. Im Schließmodus des Startventils 22 fließt die Flüssigkeit direkt vom Eingang 23 des Startventils 22 zu dem Hauptleitungsausgang 26 des Startventils 22. Im Schließmodus des Startventils 22 fließt die von der Hochdruckpumpe 3 geförderte Flüssigkeit unmittelbar von dem Pumpenabschnitt 14 in den Ausspritzabschnitt 15 ohne einen Umweg über die Rückführleitung 12. Der Schließmodus des Startventils 22 wird auch als Betriebsmodus bezeichnet.

Wie in den Fig. 1 bis 3 dargestellt, umfasst das Hochdruckreinigungsgerät 1 ein Rückschlagventil 24. Das Rückschlagventil 24 ist im Druckraum 10 angeordnet. Das Rückschlagventil 24 ist stromabwärts der Hochdruckpumpe 3 angeordnet. Das Rückschlagventil 24 ist stromabwärts des Startventils 22 angeordnet. Das Rückschlagventil 24 ist stromaufwärts der Abschalteinrichtung 7 im Druckraum 10 angeordnet. Das Startventil 22 ist in der Hauptleitung 5 zwischen der Hochdruckpumpe 3 und dem Rückschlagventil 24 angeordnet. Dadurch, dass die Abschalteinrichtung 7 zwischen dem Rückschlagventil 24 und dem Hauptleitungsventil 8 angeordnet ist, kann der Druck auf die Abschalteinrichtung 7, solange der Motor 4 zum Antrieb der Hochdruckpumpe 3 läuft und sich das Hautleitungsventil 8 im geschlossenen Zustand befindet, nur steigen und nicht fallen. Dies kann auch bewirken, dass der Druck auf das Druckentlastungsventil 21, solange der Motor 4 zum Antrieb der Hochdruckpumpe 3 läuft und sich das Hauptleitungsventil 8 im geschlossenen Zustand befindet, nur steigen kann. So ist sichergestellt, dass der Druck im Druckraum 10 den Druckschwellwert überschreitet und die Abschalteinrichtung 7 den Motor 4 in den Aus-Zustand überführt. Ebenfalls kann so sichergestellt sein, dass der Druck im Druckraum 10 den Druckschwellwert überschreitet und das Druckentlastungsventil 21 öffnet.

Fig. 4 zeigt das Ventil 22 in teilgeschnittener Darstellung. Das Startventil 22 besitzt ein Ventilgehäuse 36. In dem Ventilgehäuse 36 ist das Ventilglied 27 angeordnet. Das Ventilglied 27 ist in dem Ventilgehäuse 36 in einer Bewegungsrichtung 49 beweglich. Die mittels der Hochdruckpumpe 3 von dem Anschluss 2 zu der Ausspritzöffnung 6 durch die Hauptleitung 5 geförderte Flüssigkeit trifft in der Hauptleitung 5 in einer Strömungsrichtung 50 auf das Startventil 22, insbesondere auf das Ventilglied 27 des Startventils 22. Die Strömungsrichtung 50 ist diejenige Richtung, in der die Flüssigkeit durch den Eingang 23 des Startventils 22 in das Startventil 22 hineinströmt. Die Bewegungsrichtung 49 des Ventilglieds 27 verläuft in Richtung der Strömungsrichtung 50. Die Bewegungsrichtung 49 verläuft entlang einer Bewegungsachse des Ventilglieds 27. Die Bewegungsrichtung 49 erstreckt sich in Längsrichtung des Startventils 22. Das Ventilglied 27 ist zum Verschließen des Ventilsitzes 35 des Startventils 22 in Strömungsrichtung 50 beweglich. Durch eine Bewegung des Ventilglieds 27 in Strömungsrichtung 50 kann der am Eingang 13 der Rückführleitung 12 angeordnete Ventilsitz 35 verschlossen werden.

Das Ventilglied 27 ist in Richtung weg von dem Eingang 13 der Rückführleitung 12 vorgespannt. Das Ventilglied 27 ist entgegen der Bewegungsrichtung 49 vorgespannt. Im Ausführungsbeispiel spannt eine Feder 37 das Ventilglied 27 in Richtung weg von der Rückführleitung 12 vor. Die Feder 37 stützt sich im Bereich des Ventilsitzes 35 des Startventils 22 ab. Die Feder 37 ist zwischen dem Ventilsitz 35 und dem Ventilglied 27 angeordnet. Das Ventilglied 27 liegt im Ruhemodus des Startventils 22 an dem in Fig. 4 dargestellten Anschlagelement 17 an. Das Anschlagelement 17 begrenzt eine Bewegung des Ventilglieds 27 in Richtung weg von der Rückführleitung 12. Das Anschlagelement 17 begrenzt eine Bewegung des Ventilglieds 27 in Richtung entgegen der Strömungsrichtung 50. Das Anschlagelement 17 begrenzt eine Bewegung des Ventilglieds 27 in Richtung entgegen der Bewegungsrichtung 49.

Das Ventilglied 27 besitzt an seiner der Rückführleitung 12 abgewandten Stirnseite eine Anströmfläche 28. Die Anströmfläche 28 ist quer, im Ausführungsbeispiel senkrecht zur Strömungsrichtung 50 ausgerichtet. Das Anschlagelement 17 steht in Strömungsrichtung 50 über einen Grundkörper 38 des Gehäuses 36 des Startventils 22 hervor. Das Anschlagelement 17 verhindert eine vollflächige Anlage der Anströmfläche 28 des Ventilglieds 27 am Gehäuse 36 des Startventils 22. In Strömungsrichtung 50 gesehen besitzt das Anschlagelement 17 eine Außenkontur. Die Außenkontur des Anschlagelements 17 begrenzt eine senkrecht zur Strömungsrichtung 50 verlaufende Anschlagfläche. Die Anschlagfläche beträgt nur einen Bruchteil der Anströmfläche 28. Die Anschlagfläche ist im Ausführungsbeispiel durch die Fläche mehrerer Anschlagelemente gebildet. Im Ausführungsbeispiel beträgt die gesamte Anschlagfläche weniger als 20%, insbesondere weniger als 10% der Ausströmfläche 28. Zwischen dem Grundkörper 38 und dem Ventilglied 27 ist im Ruhemodus des Startventils 22 ein Spalt ausgebildet. Hierfür sorgt das Anschlagelement 17.

Das Startventil 22 besitzt eine Eingangsfläche 29. Die Eingangsfläche 29 verläuft senkrecht zur Strömungsrichtung 50. Durch die Eingangsfläche 29 tritt die Flüssigkeit in das Startventil 22 ein. Durch die Eingangsfläche 29 tritt die Flüssigkeit in das Innere des Gehäuses 36 des Startventils 22 ein. Im Ruhemodus des Startventils 22 lässt das Ventilglied 27 eine minimale freie Querschnittsfläche 30 durch die Hauptleitung 5 zu. Die minimale freie Querschnittsfläche 30 ist die Fläche, die das Startventil 22 immer mindestens als Durchströmungsfläche für die Flüssigkeit zur Verfügung stellt. Im Ruhemodus des Startventils 22 entspricht die kleinste Durchströmungsfläche für die Flüssigkeit im Startventil 22 der minimalen freien Querschnittsfläche 30.

Im Ruhemodus des Startventils 22 befindet sich das Ventilglied 27 in einem durch die Flüssigkeit unbelasteten Zustand. Im Ruhemodus beträgt die minimale freie Querschnittsfläche 30 mindestens 5%, im Ausführungsbeispiel mindestens 10% der Eingangsfläche 29. Die minimale freie Querschnittsfläche 30 beträgt höchstens 70%, im Ausführungsbeispiel höchstens 60% der Eingangsfläche 29.

Das Ventilglied 27 besitzt eine zu einer Innenwand des Startventils 22 zeigende Umfangsfläche 32. Zwischen der Umfangsfläche 32 und der Innenwand 31 ist ein Spalt 33 ausgebildet. Der Spalt 33 bildet die minimale freie Querschnittsfläche 30.

Wie in Fig. 4 dargestellt, besitzt die Umfangsfläche 32 über den Umfang verteilte mehrere Aussparungen 34. Die Aussparungen 34 sind Vertiefungen in der Umfangsfläche 32. Die Umfangsfläche 32 besitzt zur Innenwand 31 des Startventils 22 einen senkrecht zur Innenwand 31 gemessenen kleinsten Spaltabstand s. Der kleinste Spaltabstand s ist in Richtung radial zur Längsachse des Startventils 22 gemessen. Der kleinste Spaltabstand s ist im Ausführungsbeispiel in Richtung radial zur Bewegungsrichtung 49 des Ventilglieds 27 gemessen. Die Aussparungen 34 besitzen zur Innenwand 31 des Startventils 22 einen senkrecht zur Innenwand 31 des Startventils 22 gemessenen größten Aussparungsabstand a. Der größte Aussparungsabstand a ist radial zur Längsachse des Startventils 22 gemessen. Der größte Aussparungsabstand a ist radial zur Bewegungsrichtung 49 des Ventilglieds 27 gemessen. Der größte Aussparungsabstand a beträgt mindestens das Doppelte des kleinsten Spaltabstands s. Es kann auch vorgesehen sein, dass der größte Aussparungsabstand a mindestens das Dreifache des kleinsten Spaltabstands s beträgt. Im Ausführungsbeispiel beträgt der größte Aussparungsabstand a mindestens das Vierfache des kleinsten Spaltabstands s. Der größte Aussparungsabstand a beträgt höchstens das 20fache des kleinsten Spaltabstands s. Der größte Aussparungsabstand a beträgt höchstens das 18fache, im Ausführungsbeispiel höchstens das 16fache des kleinsten Spaltabstands s. Es sind mindestens zwei Aussparungen 34, insbesondere mindestens vier Aussparungen, im Ausführungsbeispiel sechs Aussparungen 34 vorgesehen. Die Aussparungen 34 sind in Umfangsrichtung um die Bewegungsrichtung 49 des Ventilglieds 27, insbesondere gleichmäßig, in der Umfangsfläche 32 des Ventilglieds 27 verteilt.

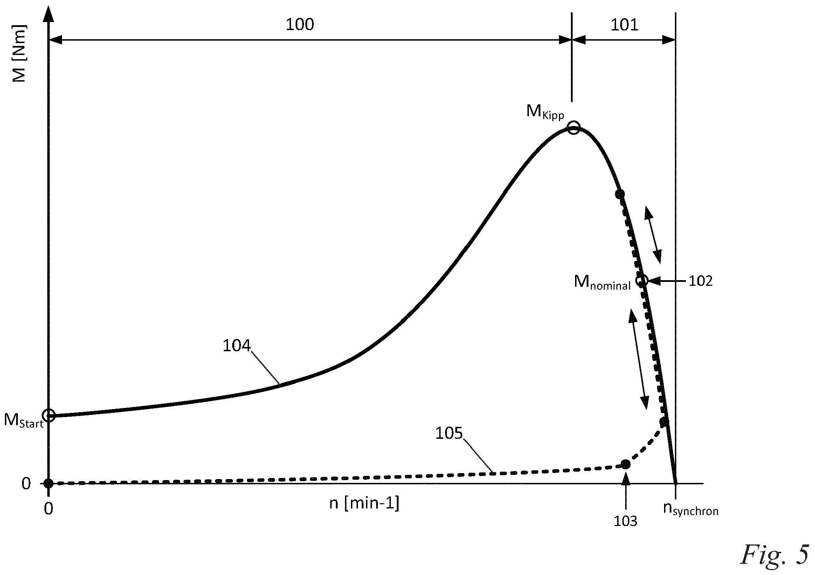

Fig. 5 zeigt die Drehmoment-Drehzahl-Kennlinie eines Asynchronmotors. Auf der x-Achse ist die Drehzahl n aufgetragen und auf der y-Achse das Drehmoment M aufgetragen. Die Kennlinie 104 ist mit durchgezogener Linie eingezeichnet. Der Arbeitsbereich 101 erstreckt sich zwischen einer dem Kippmoment mₖᵢₚₚ zugeordneten Kippfrequenz und der Synchronfrequenz n_{synchron}. Um in diesen Arbeitsbereich zu gelangen, muss der Asynchronmotor hochlaufen. Der Drehzahlbereich, in dem dieser Hochlauf stattfindet, ist mit dem Bezugszeichen 100 gekennzeichnet. Der entsprechende Drehzahlbereich wird als Hochlaufbereich 100 bezeichnet. Der Hochlaufbereich 100 liegt unterhalb des Arbeitsbereichs 101. Der Hochlaufbereich 100 grenzt unmittelbar an den Arbeitsbereich 101 an.

Aufgrund des erfindungsgemäßen Startventils 22 liegt während der Hochlaufphase 100 lediglich eine geringe Last an. Die Hochdruckpumpe 3 bzw. der Motor 4 muss gegen keinen großen Druck anarbeiten. Das erforderliche Drehmoment, gegen das der Motor 4 anarbeitet, ist mit gestrichelter Lastlinie 105 eingezeichnet. Das Startventil 22 ist beim Einschalten des Motors 4 zunächst im Ruhemodus. Dieser Zustand des Startventils 22 ist in Fig. 1 dargestellt. Aufgrund des dann während der Hochlaufphase 100 erzeugten Volumenstroms bewegt sich das Ventilglied 27 von dem Anschlagelement 17 weg in den Startmodus. Dieser Startmodus ist in Fig. 2 dargestellt. Die von der Pumpe 3 geförderte Flüssigkeit kann aus dem Druckraum 10 durch das Startventil 22 hindurch in die Rückführleitung 12 und zurück in den Saugraum 9 strömen. Hierfür ist kein großes Drehmoment erforderlich, wie die Lastkennlinie 105 im Bereich der Hochlaufphase 100 in Fig. 5 zeigt. Unproblematisch kann der Motor 4 den Hochlaufbereich 100 durchlaufen und eine Drehzahl im Arbeitsbereich 101 erreichen. Aufgrund des erfindungsgemäßen Startventils ist sichergestellt, dass das Startventil erst dann in den in Fig. 3 dargestellten Schließmodus übergeht, wenn sich die Drehzahl nach dem Hochlaufen des Motors 4 im Arbeitsbereich 101 des Motors 4 befindet. Erst dann schließt das Startventil 22, so dass keine Flüssigkeit mehr durch die Rückführleitung 12 von dem Druckraum 10 in den Saugraum 9 fließen kann. Anschließend liegt an der Pumpe 3 eine viel größere Last an, wie auch der steile Anstieg der Lastkurve 105 im Arbeitsbereich 101 in Fig. 5 zeigt. Die Drehzahl kann anschließend auf die Drehzahl am Arbeitspunkt 102 einpendeln.

Wenn das Startventil 22 bereits bei einer Drehzahl außerhalb des Betriebsbereichs 101 - bei eine Drehzahl im Hochlaufbereich 100 - schließen würde, würde die Lastkurve bereits in einem Bereich unterhalb der Kippdrehzahl, die dem Kippdrehmoment M_{Kipp} zugeordnet ist, steil ansteigen. Das erforderliche Drehmoment, das durch die Lastkurve 105 eingezeichnet ist, würde das verfügbare Drehmoment, das durch die Kennlinie 104 eingezeichnet ist, übersteigen. Die Folge wäre eine Überhitzung des Motors 4 und ein Abwürgen des Motors 4. Die Drehzahl des Motors 4 würde abnehmen und das zu Verfügung stehende Drehmoment ebenfalls, wie der Kennlinie 104 links der Kippdrehzahl zu entnehmen ist. Irgendwann würde der Motor 4 stehen bleiben.

Durch das erfindungsgemäße Startventil 22 ist zuverlässig sichergestellt, dass das Startventil 22 erst schaltet, wenn sich die Drehzahl n des Motors 4 im Betriebsbereich 101 befindet.

Die in Fig. 5 dargestellte Drehmomentkennlinie ist die eines Asynchronmotors. Die Beschreibung trifft aber auch auf andere Motortypen in analoger Weise zu.

Insbesondere nach einem Abschalten des Motors 4 durch Betätigung des in den Fig. 1 bis 3 dargestellten Schalters 18 der Abschalteinrichtung 7 nach einem Schließen des Hauptleitungsventils 8 herrscht im Druckraum 10 ein großer Druck. Dieser Druck wird teilweise durch Öffnen des Druckventils 21 abgebaut. Durch diesen Druckabbau öffnet das Startventil 22, so dass ein Rückfluss von Flüssigkeit aus dem Druckraum 10, insbesondere aus dem Pumpenabschnitt 14 des Druckraums 10 in den Saugraum 9 möglich ist. Das Startventil 22 befindet sich dann entweder im Ruhemodus oder im Startmodus. Bei einem Wiedereinschalten des Motors 4 muss die Pumpe 3 aufgrund des geöffneten Startventils 22 gegen einen viel geringeren Druck anarbeiten, als wenn das Startventil 22 nicht vorhanden wäre. Aufgrund der Anordnung des Startventils 22 in der Hauptleitung 5 ist der Volumenstrom, der ein Schalten des Startventils 22 bewirkt, klar definiert.

## Patentansprüche

1. Hochdruckreinigungsgerät umfassend:
- einen Anschluss (2) für eine Flüssigkeitsquelle,
- eine Hochdruckpumpe (3) und
- eine Hauptleitung (5), durch die mittels der Hochdruckpumpe (3) Flüssigkeit von dem Anschluss (2) zu einer Ausspritzöffnung (6) der Hauptleitung (5) förderbar ist,
wobei die Hauptleitung (5) zwischen dem Anschluss (2) und der Hochdruckpumpe (3) einen Saugraum (9) aufweist, wobei die Hauptleitung (5) zwischen der Hochdruckpumpe (3) und der Ausspritzöffnung (6) einen Druckraum (10) aufweist, wobei der Druckraum (10) mit dem Saugraum (9) fluidisch über eine Rückführleitung (12) verbunden ist, wobei das Hochdruckreinigungsgerät (1) ein Startventil (22) umfasst, und wobei das Hochdruckreinigungsgerät (1) so ausgelegt ist, dass das Startventil (22) so schließt, dass durch die Rückführleitung (12) keine Flüssigkeit von dem Druckraum (10) in den Saugraum (9) fließen kann, wenn der Volumenstrom durch das Startventil (22) mindestens einem Startvolumenschwellwert entspricht,
**dadurch gekennzeichnet, dass** das Startventil (22) in der Hauptleitung (5) stromabwärts der Hochdruckpumpe (3) angeordnet ist.

2. Hochdruckreinigungsgerät nach Anspruch 1,
**dadurch gekennzeichnet, dass** das Startventil (22) stromaufwärts der Rückführleitung (12) in der Hauptleitung (5) angeordnet ist.

3. Hochdruckreinigungsgerät nach Anspruch 1 oder 2,
**dadurch gekennzeichnet, dass** das Startventil (22) außerhalb der Rückführleitung (12) angeordnet ist.

4. Hochdruckreinigungsgerät nach einem der Ansprüche 1 bis 3,
**dadurch gekennzeichnet, dass** das Hochdruckreinigungsgerät (1) so ausgelegt ist, dass die Flüssigkeit bei Betrieb des Hochdruckreinigungsgeräts (1) mit einem Volumenstrom durch das Startventil (22) unterhalb des Startvolumenschwellwerts, insbesondere unabhängig vom Volumenstrom durch das Startventil (22), ohne Abzweigungsmöglichkeit von der Hochdruckpumpe (3) zu dem Startventil (22) in der Hauptleitung (5) fließt.

5. Hochdruckreinigungsgerät nach einem der Ansprüche 1 bis 4,
**dadurch gekennzeichnet, dass** das Startventil (22) so ausgelegt ist, dass es bei einem Volumenstrom durch das Startventil (22) unterhalb des Startvolumenschwellwerts den Durchfluss von Flüssigkeit von dem Druckraum (10) in die Rückführleitung (12) zulässt, und insbesondere dass das Startventil (22) so ausgelegt ist, dass es den Durchfluss von Flüssigkeit von dem Druckraum (10) in die Rückführleitung (12) unterbindet, wenn der Volumenstrom durch das Startventil (22) mindestens dem Startvolumenschwellwert entspricht.

6. Hochdruckreinigungsgerät nach einem der Ansprüche 1 bis 5,
**dadurch gekennzeichnet, dass** das Startventil (22) den Druckraum (10) der Hauptleitung (5) in einen Pumpenabschnitt (14) und einen Ausspritzabschnitt (15) teilt, dass der Pumpenabschnitt (14) zwischen der Hochdruckpumpe (2) und dem Startventil (22) angeordnet ist, dass der Ausspritzabschnitt (15) zwischen dem Startventil (22) und der Ausspritzöffnung (6) angeordnet ist, und dass das Startventil (22) so ausgelegt ist, dass es einen direkten Durchfluss von Flüssigkeit von dem Pumpenabschnitt (14) in den Ausspritzabschnitt (15) zulässt, wenn der Volumenstrom durch das Startventil (22) mindestens dem Startvolumenschwellwert entspricht.

7. Hochdruckreinigungsgerät nach einem der Ansprüche 1 bis 6,
**dadurch gekennzeichnet, dass** das Startventil (22) einen Eingang (23) besitzt, der mit der Hauptleitung (5) verbunden ist, dass das Startventil (22) einen Rückführausgang (25) besitzt, der mit der Rückführleitung (12) verbunden ist, und dass das Startventil (22) einen Hauptleitungsausgang (26) besitzt, der mit der Hauptleitung (5) verbunden ist.

8. Hochdruckreinigungsgerät nach Anspruch 7,
**dadurch gekennzeichnet, dass** das Startventil (22) den Rückführausgang (25) schließt, wenn der Volumenstrom durch das Startventil (22) mindestens dem Startvolumenschwellwert entspricht.

9. Hochdruckreinigungsgerät nach einem der Ansprüche 1 bis 8,
**dadurch gekennzeichnet, dass** das Startventil (22) ein Ventilglied (27) besitzt, und dass die mittels der Hochdruckpumpe (3) von dem Anschluss (2) zu der Ausspritzöffnung (6) durch die Hauptleitung (5) geförderte Flüssigkeit in der Hauptleitung (5) in einer Strömungsrichtung (50) auf das Startventil (22) trifft.

10. Hochdruckreinigungsgerät nach Anspruch 9,
**dadurch gekennzeichnet, dass** das Ventilglied (27) in einer Bewegungsrichtung (49) beweglich ist, und dass die Bewegungsrichtung (49) in Richtung der Strömungsrichtung (50) verläuft.

11. Hochdruckreinigungsgerät nach Anspruch 9 oder 10,
**dadurch gekennzeichnet, dass** das Hochdruckreinigungsgerät (1) ein Anschlagelement (17) für das Ventilglied (27) umfasst, dass das Ventilglied (27) in Richtung auf das Anschlagelement (17) vorgespannt ist, und dass das Ventilglied (27) bei Unterschreiten eines Ruhevolumenschwellwerts des Volumenstroms durch das Startventil (22), insbesondere in einem durch die Flüssigkeit unbelasteten Zustand des Ventilglieds (27), an dem Anschlagelement (17) anliegt.

12. Hochdruckreinigungsgerät nach einem der Ansprüche 9 bis 11,
**dadurch gekennzeichnet, dass** das Startventil (22) senkrecht zur Strömungsrichtung (50) eine Eingangsfläche (29) aufweist, durch die die Flüssigkeit in das Startventil (22) eintritt, dass das Ventilglied (27) in einem durch die Flüssigkeit unbelasteten Zustand eine minimale freie Querschnittsfläche (30) durch die Hauptleitung (5) zulässt, und dass die minimale freie Querschnittsfläche (30) mindestens 5%, insbesondere mindestens 10% der Eingangsfläche (29) beträgt.

13. Hochdruckreinigungsgerät nach Anspruch 11 oder 12,
**dadurch gekennzeichnet, dass** das Ventilglied (27) eine zu einer Innenwand (31) des Startventils (22) zeigende Umfangsfläche (32) besitzt, dass zwischen der Umfangsfläche (32) und der Innenwand (31) ein Spalt (33) ausgebildet ist, der die minimale freie Querschnittsfläche (30) bildet.

14. Hochdruckreinigungsgerät nach Anspruch 13,
**dadurch gekennzeichnet, dass** die Umfangsfläche (32) über den Umfang verteilt mehrere Aussparungen (34) besitzt, dass die Umfangsfläche (32) zur Innenwand (31) des Startventils (22) einen senkrecht zur Innenwand (31) des Startventils (22) gemessenen kleinsten Spaltabstand (s) besitzt, dass die Aussparungen (34) zur Innenwand (31) des Startventils (22) einen senkrecht zur Innenwand (31) des Startventils (22) gemessenen größten Aussparungsabstand (a) besitzen, und dass der größte Aussparungsabstand (a) mindestens das Doppelte des kleinsten Spaltabstands (s), und insbesondere höchstens das 20fache des kleinsten Spaltabstands (s), beträgt.

15. Hochdruckreinigungsgerät nach einem der Ansprüche 9 bis 14,
**dadurch gekennzeichnet, dass** das Ventilglied (27) zum Verschließen eines Ventilsitzes (35) des Startventils (22) in Strömungsrichtung (50) beweglich ist, und dass der Ventilsitz (35) an einem Eingang (13) der Rückführleitung (12) angeordnet ist.
